(19) Europäisches Patentamt

European Patent Office

Office européen des brevets

(11) Veröffentlichungsnummer: **0 433 491 B1**

## (12) EUROPÄISCHE PATENTSCHRIFT

(45) Veröffentlichungstag der Patentschrift: **01.09.93**

(21) Anmeldenummer: **89123786.9**

(22) Anmeldetag: **22.12.89**

(51) Int. Cl.5: **H02P 5/28**, D06F 37/30

(54) **Einphasen-Reihenschlussmotor, insbesondere zum Antrieb eines Waschautomaten.**

(43) Veröffentlichungstag der Anmeldung:
**26.06.91 Patentblatt 91/26**

(45) Bekanntmachung des Hinweises auf die Patenterteilung:
**01.09.93 Patentblatt 93/35**

(84) Benannte Vertragsstaaten:
**CH DE FR GB IT LI SE**

(56) Entgegenhaltungen:
**DE-A- 2 600 139**
**DE-B- 2 842 377**
**US-A- 4 378 517**

**VDI-NACHRICHTEN 20 Juni 1962, DE Seite 4 "IMPULSE BESTIMMEN DIE MOTORDREH-ZAHL"**

(73) Patentinhaber: **SIEMENS AKTIENGESELL-SCHAFT**
**Wittelsbacherplatz 2**
**D-80312 München(DE)**

(72) Erfinder: **Klein, Hans-Wilhelm, Dipl.-Ing.**
**Schlesierstrasse 42**
**D-8700 Würzburg(DE)**

## Beschreibung

Die Erfindung bezieht sich auf einen Einphasen-Reihenschlußmotor, insbesondere zum Antrieb eines Waschautomaten gemäß Oberbegriff des Anspruches 1; ein Gleichstrom-Motorantrieb dieser Art ist aus dem Aufsatz "Impulse bestimmten die Motordrehzahl" in VDI-Nachrichten vom 20.06.1962, Seite 4/Nr. 25 bekannt.

Im bekannten vorgenannten Fall ist zur Drehzahlregelung eines Gleichstrommotors ein elektronischer Tastschalter aus steuerbaren Siliziumzellen und einem Kondensatorlöschkreis zwischen einer Gleichstromquelle und einem Gleichstrommotor vorgesehen, der von einer Freilaufdiode überbrückt ist. Durch den elektronischen Schalter werden Stromimpulse für den Gleichstrommotor periodisch ein- und ausgeschaltet; von dem parallel zum Motor vorgesehenen, die Freilaufdiode enthaltenden Freilaufzweig wird der Motorstrom in dem Zeitraum übernommen, in dem der elektronische Schalter die Verbindung zwischen der Gleichstromquelle und dem Gleichstrommotor unterbricht.

Durch die DE-AS 28 42 377 ist es bekannt, bei einem Einphasen-Reihenschlußmotor zum Antrieb eines Waschautomaten zur Erzielung einer hohen Drehzahlspreizung die ständerseitige Erregerwicklung derart umzuschalten, daß im Schleuderbetrieb mit der höheren Drehzahl nur ein Teil der im Waschbetrieb mit der niedrigen Drehzahl an das speisende Einphasen-Wechselstromnetz angeschlossene Feldwicklung stromdurchflossen ist; in der Regel wird zur Umschaltung der Feldwicklung ein relaisbetätigter Schalter benutzt, der nur im stromlosen Zustand schalten darf.

Ein mit geringem Fertigungsaufwand herstellbarer und trotzdem eine hohe Betriebssicherheit gewährleistender Einphasen-Reihenschlußmotor, der auch bei hoher Drehzahlspreizung durch Feldschwächung durch Teilnutzung der Erregerwicklung im hohen Drehzahlbereich eine kontinuierliche Drehzahländerung durch die Malbleiterschaltungsanordnung ermöglicht, kann erfindungsgemäß durch die Lehre des Anspruches 1 erreicht werden; vorteilhafte Ausgestaltungen der Erfindung sind jeweils Gegenstand der Unteransprüche.

Ausgehend von der Erkenntnis, daß bei niedrigen Drehzahlen, wie z.B. im Waschbetrieb eines Waschautomatenantriebs, der Spannungsbedarf des Motors ebenfalls niedrig und somit die durch die Halbleiterschaltungsanordnung vorgegebene Einschaltzeit des Motors gering und die Ausschaltzeit groß und daß bei hohen Drehzahlen, wie z.B. im Schleuderbetrieb eines Waschautomatenantriebes, der Spannungsbedarf des Motors hoch und somit die durch die Halbleiterschaltungsanordnung vorgebbare relative Einschaltdauer groß und die Ausschaltzeit klein sind, kann durch die erfindungsgemäße Ausbildung und Verbindung der Erregerwicklung ohne Erfordernis eines gesonderten Relais zur Feldwicklungsumschaltung zwischen niedrigem Drehzahlbereich bei vollem Feld und hohem Drehzahlbereich bei verringertem Feld über den gesamten Regel- bzw. Steuerbereich eine kontinuierliche Feldschwächung beim Übergang von der niedrigsten Drehzahl zur höchsten Drehzahl erreicht werden; dabei ist die maximale statorseitige Erregerwicklung bei der geringsten, durch die Halbleiterschaltungsanordnung vorgegebenen Einschaltdauer und die minimale statorseitige Erregerwicklung bei der maximalen, durch die Halbleiterschaltungsanordnung vorgegebenen Einschaltdauer wirksam.

Zweckmäßig ist eine feste Anschlußverbindung der Halbleiterschaltungsanordnung an dem Teilungsanschluß der Erregerwicklung, deren eines Ende an den einen Pol der Ankerwicklung und deren anderes Ende über den Freilaufzweig an den anderen Pol der Ankerwicklung des Einphasen-Reihenschlußmotors (Kommutatormotors) anschließbar ist; in weiterer Fertigungsvereinfachung ist ausgehend von einem Einphasen-Reihenschlußmotor für einen Waschautomatenantrieb mit einer Erregerwicklung für den Waschbetrieb und einer Erregerwicklungsanzapfung für den Schleuderbetrieb ein Teilungsanschluß der Erregerwicklung zur Verbindung mit der Halbleiterschaltungsanordnung im Bereich der Erregerwicklungsanzapfung vorgesehen.

Die Funktion der Feldschwächung ergibt sich erfindungsgemäß quantitativ in Abhängigkeit von der Einschaltzeit te der Halbleiterschaltungsanordnung wie folgt:

$O$ = magnetische Durchflutung des Ständer-Erregerfeldes

$I$ = Mittelwert des Motorstromes (für ein- und Freilaufzeit gleich groß angenommen

$N_1$ = Windungszahl des ersten Teils (E-F1) der Erregerwicklung

$N_2$ = Windungszahl des zweiten Teils (F1-F2) der Erregerwicklung

$$O = I (te \times N_1) + I (1 - te) (N_1 + N_2)$$
$$O/I = N_1 + N_2 - (te \times N_2)$$

Waschbetrieb (te → 0): $\theta/I$ → $N_1 + N_2$ (volles Feld)

Schleuderbetrieb (te → 1): $\theta/I$ → $N_1$ (Feldschwächung)

Es ist ersichtlich, daß bei fest verdrahtbarer Erregerwicklung einerseits und dabei über eine Anzapfungsverbindung fest angeschlossener Halbleiterschaltungsanordnung, d.h. ohne Relaisumschaltung der Erregerwicklung, eine kontinuierlich veränderbare Drehzahleinstellung in einem Waschbetrieb-Bereich mit vollem magnetischen Feld einerseits bis zu einem Schleuderbetrieb mit Feldschwächung andererseits möglich ist.

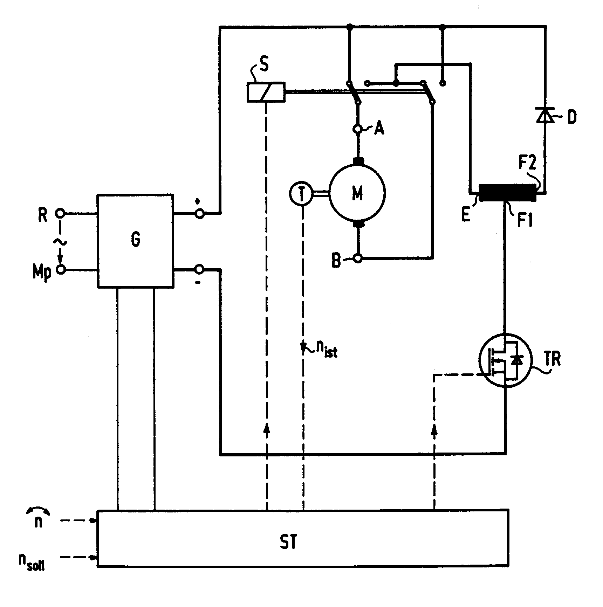

Die Erfindung sowie weitere vorteilhafte Ausgestaltungen der Erfindung werden im folgenden anhand eines in der Zeichnung schematisch dargestellten Ausführungsbeispiels näher erläuert.

Das Schaltungsbeispiel zeigt einen aus einem Einphasen-Wechselstromnetz R; $M_p$ über eine Gleichrichterbrücke mit zweckmäßigerweise integriertem Entstörfilter im Chopperbetrieb mittels eines Transistors TR speisbaren Kommutatormotor M mit den Polen A, B seiner Ankerwicklung und einer Erregerwicklung E-F2 mit einer Anzapfung F1. Der Transistor TR ist über den Teilungsanschluß F1 derart mit der Erregerwicklung E-F2 fest verbunden, daß während der Einschaltzeit te des Transistors TR nur der erste Teil E-F1 der Erregerwicklung und während der Ausschaltzeit des Transistors TR sowohl der erste Teil E-F1 als auch der zweite Teil F1-F2 der Erregerwicklung von dem dann fließenden Freilauf-Motorstrom durchflossen ist, da die gesamte Erregerwicklung in dem parallel zum Kommutatormotor M liegenden Freilaufzweig mit der Freilaufdiode D1 angeordnet ist.

Der Transistor TR steht in Schaltabhängigkeit von einer Steuerbzw. Regelvorrichtung ST, der eingangsseitig ein Drehzahl-Sollwert $n_{soll}$ und eine bestimmte Drehrichtung n und als Istwert die von einem Tachogenerator T angegebene Drehzahl $n_{ist}$ des Kommutatormotors M vorgegeben sind. Zur Drehzahlumkehr, insbesondere im Waschbetrieb eines Waschautomaten mit ständig reversierender Waschtrommelbewegung, dient ein Umpol-Schalter S.

## Patentansprüche

1.  Einphasen-Reihenschlußmotor, insbesondere zum Antrieb eines Waschautomaten, mit über eine impulsgesteuerte Halbleiterschaltungsanordnung, z.B. mit einem Transistor (TR), durch Feldänderung der Erregerwicklung (E-F2) einstellbarer Drehzahl und parallel zur Motorwicklung angeordnetem Freilaufzweig, z.B. mit einer Freilaufdiode (D), **gekennzeichnet durch** eine derartige Aufteilung der Erregerwicklung (E-F2) mit einer Verbindung eines Teilungsanschlusses (F1) zu der Halbleiterschaltungsanordnung (TR), daß der Motorstrom über einen ersten Teil (E-F1)der Erregerwicklung (E-F2) sowohl in der Ein- als auch in der Ausschaltzeit und über einen zweiten Teil (F1-F2) der Erregerwicklung nur in der Ausschaltzeit der Halbleiterschaltungsanordnung (TR) fließt.

2.  Einphasen-Reihenschlußmotor nach Anspruch 1, **gekennzeichnet durch** eine feste Anschlußverbindung der Halbleiterschaltungsanordnung (TR) an den Teilungsanschluß (F1) der Erregerwicklung (E-F2), deren eines Ende (E) an den einen Pol (B) der Ankerwicklung und deren anderes Ende (F2) über den Freilaufzweig an den anderen Pol (A) der Ankerwicklung des Einphasen-Reihenschlußmotors z.B. kommutatormotors (M) anschließbar ist.

3.  Einphasen-Reihenschlußmotor für einen Waschautomatenantrieb mit einer Erregerwicklung für den Waschbetrieb und einer Erregerwicklungsanzapfung für den Schleuderbetrieb nach Anspruch 1 und/oder 2, **gekennzeichnet durch** einen Teilungsanschluß (F1) der Erregerwicklung (E-F2) zur Verbindung mit der Halbleiterschaltungsanordnung im Bereich der Erregerwicklungsanzapfung.

4.  Einphasen-Reihenschlußmotor nach einem der Ansprüche 1 bis 3, **gekennzeichnet durch** einen über eine Gleichrichterbrücke (G) aus einem Einphasen-Wechselstromnetz (R; $M_p$) gespeisten Kommutatormotor (M) und eine im sogenannten Chopperbetrieb arbeitende Halbleiterschaltungsanordnung (TR).

5.  Einphasen-Reihenschlußmotor nach einem der Ansprüche 1 bis 4, **gekennzeichnet durch** eine in Schaltabhängigkeit von einer Drehzahlsteuer- bzw. Drehzahlregelvorrichtung (ST) stehende Halbleiterschaltungsvorrichtung (TR).

## Claims

1.  A single-phase series-wound motor, in particular for driving an automatic washing machine, having a rotational speed, adjustable by a field change in the excitation winding (E-F2) by an impulse-controlled semiconductor circuit arrangement with, for example, a transistor (TR), and having a free-wheeling bridge-arm with, for example, a free-wheeling diode (D) arranged in parallel with the motor winding, characterised by a tap in the excitation winding (E-F2), with a connection of a tap terminal (F1) to the semiconductor circuit arrangement (TR), such that the motor current flows through a first part (E-F1) of the excitation winding (E-F2) both in the energised time and the non-energised time and flows through a second part (F1-F2) of the excitation winding only in the non-energised time of the semiconductor circuit arrangement (TR).

2.  A single-phase series-wound motor according to claim 1, characterised by a fixed terminal connection of the semiconductor circuit arrangement (TR) to the tap terminal (F1) of the excitation winding (E-F2), one end (E) of which can be connected to the one pole (B) of the armature winding and the other end (F2) can be connected to the other pole (A) of the armature winding of the single-phase series-wound motor, for example, a commutator motor (M) through the free-wheeling bridge-arm.

3.  A single-phase series-wound motor for the drive of an automatic washing machine, having an excitation winding for the washing operation and an excitation winding tap for the spinning operation, according to claim 1 and/or 2, characterised by a tap terminal (F1) of the excitation winding (E-F2) for connecting to the semiconductor circuit arrangement in the region of the excitation winding tap.

4.  A single-phase series-wound motor according to one of claims 1 to 3, characterised by a commutator motor (M) fed by a rectifier bridge (G) from a single-phase a.c. system (R; $M_p$), and a semiconductor circuit arrangement (TR) working in the so-called chopper operation.

5.  A single-phase series-wound motor according to one of claims 1 to 4, characterised by a semi-conductor circuit device, dependent for switching upon a speed control and/or speed regulation device (ST).

**Revendications**

1.  Moteur série monophasé, notamment pour l'entraînement d'une machine automatique à laver le linge, possédant une vitesse de rotation réglable par l'intermédiaire d'un montage à semiconducteurs commandé par impulsions, par exemple un transistor (TR), par modification du champ de l'enroulement d'excitation (E;F2), et comportant un élément à effet unidirectionnel, qui est branché en parallèle avec l'enroulement du moteur, par exemple avec une diode à effet unidirectionnel (D), caractérisé par une subdivision telle de l'enroulement d'excitation (E-F2) avec un raccordement d'une borne de division (E-F1) avec le montage à semiconducteurs (TR) que le courant du moteur circule dans la première partie (E-F1) de l'enroulement d'excitation (E-F2) aussi bien à l'instant du branchement qu'à l'instant du débranchement et circule dans une seconde partie (F1-F2) de l'enroulement d'excitation uniquement à l'instant du débranchement du montage à semiconducteurs (TR).

2.  Moteur série monophasé suivant la revendication 1, caractérisé par une liaison de raccordement fixe du montage à semiconducteurs (TR) avec la borne de division (F1) de l'enroulement d'excitation (E-F2), dont une extrémité (11) peut être raccordée à un pôle (B) de l'enroulement d'induit et dont l'autre extrémité (F2) peut être raccordée, par l'intermédiaire de l'élément à effet unidirectionnel, à l'autre pôle (A) de l'enroulement d'induit du moteur série monophasé, par exemple le moteur à collecteur (M).

3.  Moteur série monophasé pour un dispositif d'entraînement de machine à laver automatique comportant un enroulement d'excitation pour l'opération de lavage et une prise sur l'enroulement d'excitation pour l'opération d'essorage suivant la revendication 1 et/ou 2, caractérisé par une borne de division (F1) de l'enroulement d'excitation (E-F2) pour la liaison avec le montage à semiconducteurs dans la zone de la prise de l'enroulement d'excitation.

4.  Moteur série monophasé suivant l'une des revendications 1 à 3, caractérisé par un moteur à collecteur (M) alimenté par l'intermédiaire d'un pont redresseur (G) à partir d'un réseau alternatif monophasé (R;$M_p$), et un montage à semiconducteurs (TR) travaillant selon ce que l'on désigne par un fonctionnement en hacheur.

5.  Moteur série monophasé suivant l'une des revendications 1 à 4, caractérisé par un montage à semiconducteurs (TR) dont la commutation dépend d'un dispositif (ST) de commande ou de régulation de la vitesse de rotation.